# EUROPEAN PATENT APPLICATION

(11) **EP 2 317 177 A1**
(43) Date of publication of application: **04.05.2011**
(21) Application number: 10162061.5
(22) Date of filing: 05.05.2010
(51) Int. Cl.: F16H 7/08

(54) **A tension regulator applied to a timing belt**

(30) Priority: 28.10.2009 TW 098219919
(71) Applicant: Gong Shun Technology Co., Ltd., Kaohsiung County 820 (TW)
(72) Inventor: Wang, Guan-Ren, Kaohsiung County 820 (TW)
(74) Representative: Chaillot, Geneviève

(57) **Abstract**

A tension regulator (2) employs a first blocking member (3) fixed between a plunger (232) on a propelling member (231) and the blocking device (24) to permit a smooth sliding movement of the propelling member (231) to be achieved via a stable support while the plunger (232) driving the propelling member (231) of the propelling device (23) . Additionally, the reinforced limitation to the sliding movement of the plunger (232) provided by the first blocking member (3) could accordingly prevent the propelling member (231) from an over-protruding incident. Thence, since hydraulic oil (25) is properly blocked by the first blocking member (3), no leakage of the oil would adversely occur, and no air would unfavorably enter into the sliding space (211) in time of the sliding. Thence, the tension regulator (2) possesses a more stable operation, and a driving safety could be promoted.

## Description

### BACKGROUND OF THE INVENTION

### 1. Field of the Invention

The present invention relates to a tension regulator, particularly to a tension regulator applied to a timing belt.

### 2. Description of the Related Art

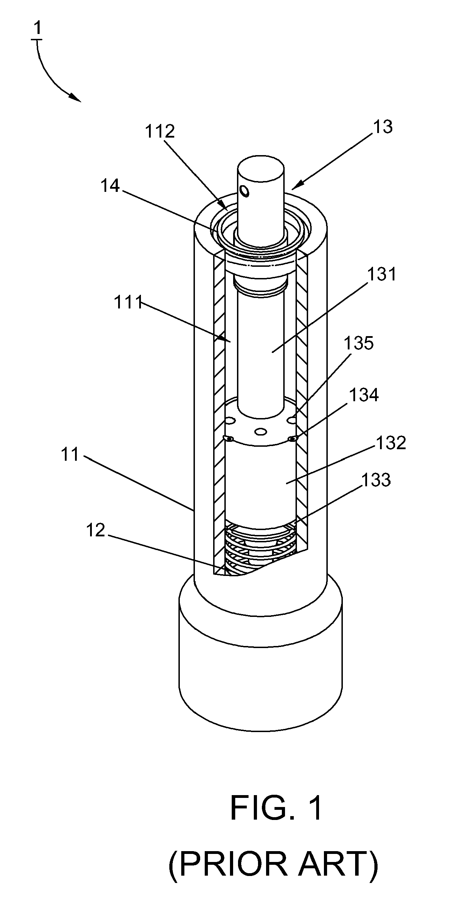

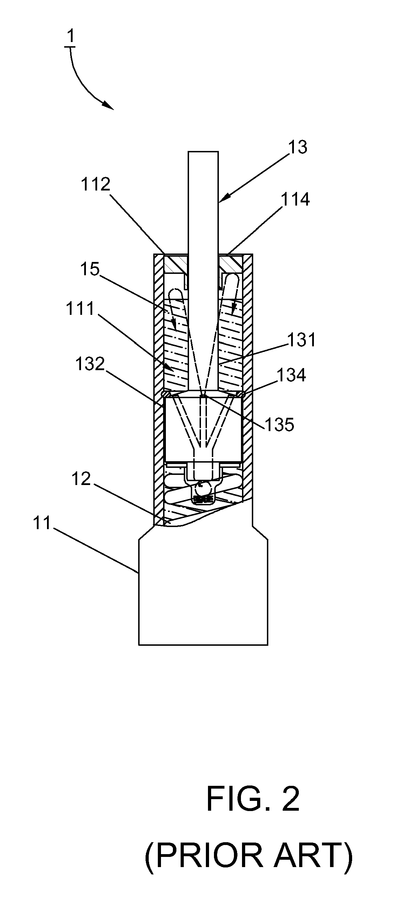

Referring to Figs. **1** and **2****,** a conventional tension regulator **1** applied to a timing belt comprises a body **11,** an elastic device **12** disposed in the body **11,** a propelling device **13** elongated into the body **11** for being propelled by the elastic device **12,** and a blocking device **14** sealing the body **11** as well as blocking the propelling device **13.** Wherein, the body **11** has a sliding space **111,** whose diameter is uniform and whose interior is capable of filling with hydraulic oil **15,** and an opening **112** formed on the body **11** for the sliding space **111** to communicate with an exterior through the opening **112.** Moreover, the propelling device **13** has a propelling member **131** elongated into the sliding space **111** as well as protruded out of the blocking device **14,** a plunger **132** disposed on the propelling member **131** sliding within the sliding space **111,** a controlling member **133** disposed on the plunger **132,** and a limiting member **134** disposed on the sliding space **111** for limiting a sliding movement of the plunger **132.** Herein, a plurality of apertures **135** are defined on the plunger **132** and controlled by the controlling member **133.** As a result, an on-off function is achievable.

Referring to Fig. **2****,** the timing belt (not shown) is propelled by the tension regulator **1;** that is, the plunger **132** is propped by the elasticity of the elastic device **12,** so that the propelling member **131** protruded out of the blocking device **14** is able to thrust the timing belt with proper pressure. Afterward, the propelling member **131** would be triggered by means of the bounce of the timing belt, so that the plunger **132** would retract to engage with the elastic device **12.** Accordingly, the propelling device **13** resumes the action for a next thrust, and thence promotes a regular operation of the timing belt.

However, the conventional tension regulator **1** has the following shortcomings:
**1.** When the replenishment of the hydraulic oil **15** to the conventional tension regulator **1** is artificially sealed with the blocking device **14,** air in the sliding space **111** could not be entirely exhausted; namely, the air still exists in the body **11.** As a result, while the plunger **132** slides in the sliding space **111,** the air would mingle with the flowed hydraulic oil **15,** which incurs the air to pervade the sliding space **111.** Whereby, since the air is contractible, an incomplete operation of the tension regulator would be unfavorably resulted, thereby adversely incurring an unsafe driving.
   Furthermore, in view of the artificial filling of the hydraulic oil **15**, the filling amount of the hydraulic oil **15** is subject to change. That is, the filling quantity of the hydraulic oil **15** would readily affect the air amount contained in the body **11.** However, the more the air is contained in the sliding space **111,** the less the hydraulic oil **15** would be adversely filled, and a stable motion of the plunger **132** is accordingly inaccessible. As a result, the hydraulic oil **15** mixed with air would readily influence the stability of the tension regulator **1.**
**2.** In fact, during the operation, the propelling member **131** is merely supported by the plunger **132** and the blocking device **14.** However, since the blocking device **14** is made of rubber, which has a softer characteristic, an unstable support is easily caused in time of stretching or contracting the propelling member **131.** As a result, the propelling member **131** likely becomes slanted. Thereby, the protruding distance of the propelling member **131** is probably varied, and the car is possibly damaged because of the imperfect push from the propelling member **131** on the timing belt.
**3.** The plunger **132** is only restricted by the limiting member **134** for attaining an engagement with the body **11.** Herein, because the abovementioned installation is artificial or due to the fact that the propelling of the slanted propelling member **131** with the plunger **132** adversely incurs a burden on the limiting member **134,** the plunger **132** is unable to be properly engaged with the limiting member **134.** Thus, the plunger **132** unavoidably protrudes beyond the limiting member **134,** and the propelling member **131** improperly projects from the body **11.** As a result, the propelling device **13** is unable to offer a precise thrust impinged on the timing belt, and the driving safety is influenced.

### SUMMARY OF THE INVENTION

The object of the present invention is to provide a tension regulator applied to a timing belt, which provides a firm support for a propelling member to avoid an over-protruding incident and preferably prevents hydraulic oil from leaking out in view of any undue pressure; whereby, a stable operation of the present invention could be achieved to promote the driving safety.

The tension regulator applied to a timing belt in accordance with the present invention comprises a body, an elastic device disposed in the body, a propelling device elongated into the body as well as propelled by the elastic device, and a blocking device sealing the body as well as blocking the propelling device. Wherein, a first blocking member is fixed between a plunger of the propelling device and the blocking device for giving a synchronous support, thereby permitting a smooth sliding movement of the propelling device while the plunger drives the propelling member to displace. Furthermore, the arrangement of the blocking member substantially leads to air unable to penetrate into the body during the sliding of the plunger, and the hydraulic oil flowing along with the sliding plunger would not scatter to impact the blocking member. As a result, the hydraulic oil would not readily leak out. In addition, since the first blocking member could reinforce the limitation to the sliding movement of the plunger, the propelling member could be accordingly prevented from an over-protruding incident. Thence, the tension regulator preferably facilitates a stable operation and efficiently promotes a driving safety.

In this connection, the tension regulator applied to a timing belt as claimed comprises a body, an elastic device disposed in the body, a propelling device disposed in the body for being propelled by the elastic device, and a blocking device sealing the body for blocking the propelling device; wherein, a sliding space being defined in the body for accommodating hydraulic oil, and an opening being defined on the body for the sliding space to communicate with an exterior; the propelling device including a propelling member elongated into the sliding space and protruded out of the blocking device, a plunger connected to the propelling member and allowed sliding within the sliding space, a controlling member installed on the plunger, and a limiting member mounted on the sliding space for limiting a sliding movement of the plunger; a plurality of apertures being defined on the plunger, and an on & off function of the apertures being controlled by the controlling member;
wherein, a first blocking member being disposed between a plunger and the blocking device as well as engaged with the sliding space; a sliding movement of the propelling member brought about by the plunger would not affect the first blocking member, so that a stable support would be provided to prop up the sliding movement of the propelling member and the hydraulic oil would be prevented from scattering in time of the plunger being moved.

Preferably, the first blocking member is grasped by a fastener for fixing on the sliding space.

Preferably, a second blocking member is disposed on the body and clasped by a fastener for fixing on the sliding space; the second blocking member includes a blocking wall, and an accommodating room encompassed by the blocking wall.

Preferably, the sliding space includes a first area and a second area intercommunicated with the first area as well as disposed near to the opening; the first area has a diameter smaller than a diameter of the second area.

The advantages of the present invention over the known prior arts will become more apparent to those of ordinary skilled in the art upon reading the following descriptions in junction with the accompanying drawings.

### BRIEF DESCRIPTION OF THE DRAWINGS

- Fig. **1**: is a schematic view showing a conventional tension regulator;
- Fig. **2**: is a schematic view showing the conventional tension regulator in using;
- Fig. **3**: is a perspective view showing a first preferred embodiment of the present invention;
- Fig. **4**: is schematic view showing the first preferred embodiment in using;
- Fig. **5**: is another schematic view showing the first preferred embodiment in using;
- Fig. **6**: is a schematic view showing a second preferred embodiment of the present invention;
- Fig. **7**: is a schematic view showing a third preferred embodiment of the present invention; and
- Fig. **8**: is a schematic view showing a fourth preferred embodiment of the present invention.

### DETAILED DESCRIPTION OF THE PREFERRED EMBODIMENTS

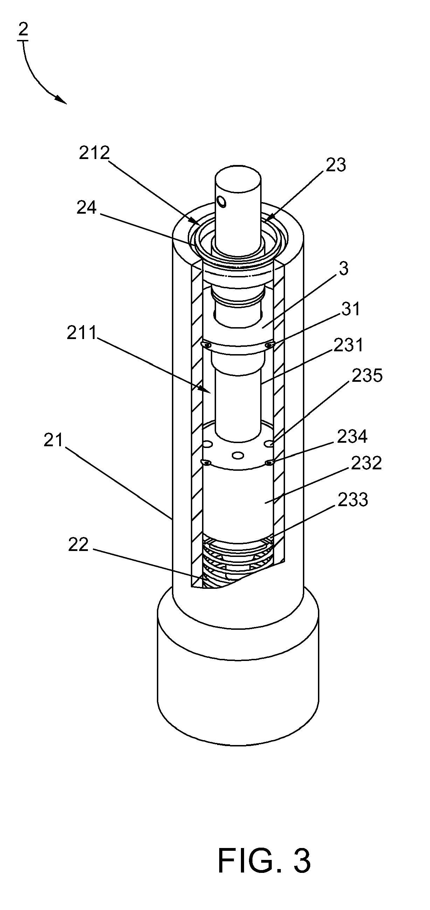

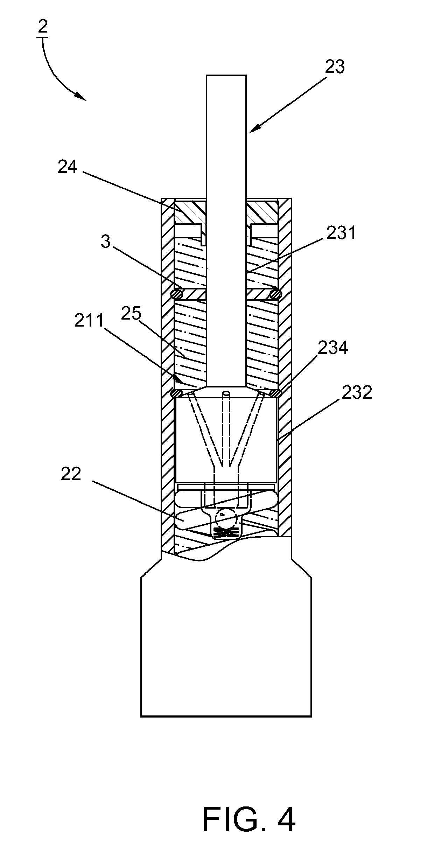

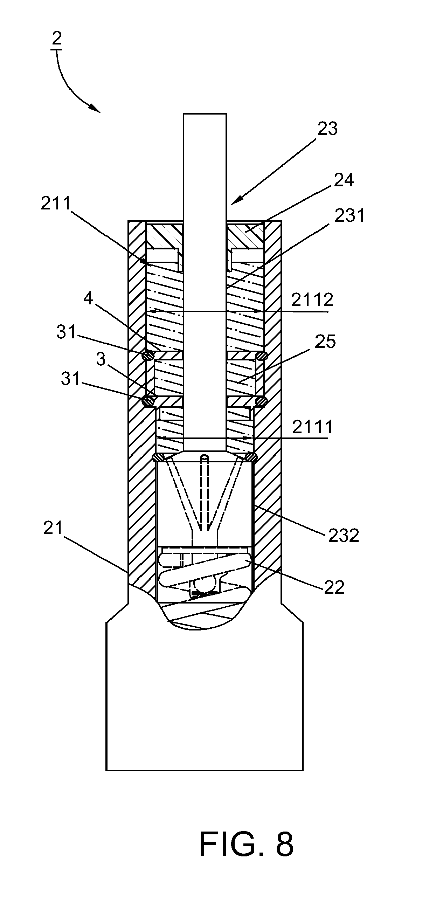

Fig. **3** shows a first preferred embodiment of the present invention, a tension regulator **2** adapted for a timing belt comprising a body **21,** an elastic device **22** disposed in the body **21,** a propelling device **23** disposed in the body **21** as well as propelled by the elastic device **22,** and a blocking device **24** sealing the body **21** and blocking the propelling device **23.** Wherein, a sliding space **211** is formed inside the body **21** for being filled with hydraulic oil **25** (shown in Fig. **4****).** Concurrently, an opening **212** is defined on the body **21** for the sliding space **211** to communicate with the exterior thereby. The propelling device **23** includes a propelling member **231** elongated into the sliding space **211** as well as protruded out of the blocking device **24,** a plunger **232** disposed on the propelling member **231** for sliding inside the sliding space, a controlling member **233** disposed on the plunger **232,** and a limiting member **234** disposed on the sliding space **211** for limiting a sliding movement of the plunger **232.** Herein, the plunger **232** could be alternatively formed by a longer structure for wrapping the elastic device **22** as shown in Fig. **8****;** the following embodiments mainly depict the plunger **232** structured by a shorter contour so as to engaging with the elastic device **22** as shown from Figs. **3** to **7****.** Further, a plurality of apertures **235** are defined on the plunger **232** as well as controlled by the controlling member **233** so as to accomplish an on-off function. Herein, a first blocking member **3** is disposed between the plunger **232** and the blocking device **24** as well as fixed to the sliding space **211;** the first blocking member **3** is substantially grasped by a fastener **31** as an example in this embodiment.

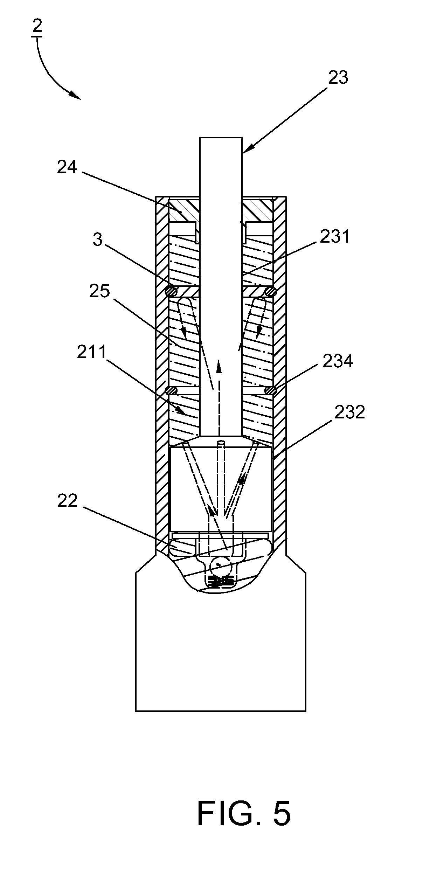

Referring to Figs. **4** and **5****,** the timing belt (not shown) is engaged with the tension regulator **2;** namely, the plunger **232** slides by means of the elastic device **22** providing with the elasticity to push the propelling member **231** toward the timing belt. Accordingly, the timing belt could be properly operated via the related propelling device **23.** Herein, concerning to the manner that the first blocking member **3** is disposed between the plunger **232** and the blocking device **24,** the sliding movement of the plunger **232** could be not only limited by the limiting member **234** but also stably supported by the first blocking member **3** when the propelling member **231** driven by the plunger **232** protrudes outward. Hereby, the first blocking member **3** does not move along with the propelling member **231,** so that the propelling member **231** could be prevented from being slanted while propelling the timing belt. Consequently, the timing belt could be well thrust. Afterward, the propelling member **231** would retract via the bounce provided by the timing belt so as to allow the plunger **232** to resume. Thereby, the propelling device **23** is able to execute its propelling again. Perceptibly, the operating stability of the tension regulator **2** applied to the timing belt is promoted to increase the driving safety.

In fact, as long as the plunger **232** is moved, the hydraulic oil **25** would be subjected to a compulsive pressure, and such pressure would allow the hydraulic oil **25** to scatter. Hereby, in view of the disposition of the first blocking member **3,** the scattered hydraulic oil **25** would be blocked for not directly impacting the blocking device **24** during the pressing. As a result, the hydraulic oil **25** would not readily seep out of the blocking device **24.** Moreover, the first blocking member **3** is also able to obstruct the air staying inside the sliding space **211** for preventing the hydraulic oil **25** from flowing along with air mingled therewith. Accordingly, the operation related to the invention could be assured to be stable. By the stable support provided by the first blocking member **3,** the plunger **232** driving the protrusion of the propelling member **231** would not slant aside, and the protruding distance out of the body **21** would not vary. In addition, even if the filling of the hydraulic oil **25** into the sliding space **211** is artificially operated, of which the amount is subjectively replenished, the location of the first blocking member **3** could be deemed as a filling extreme. That is, users continue filling the sliding space **211** with the hydraulic oil **25** until the oil level reaches the first blocking member **3** indicative of the filling extreme, so that an adequate replenishment of the hydraulic oil **25** could be preferably guaranteed without over-filling or insufficiency, and the reciprocating operation of the propelling device **23** is steady. Therefore, the tension regulator **2** applied to the timing belt possesses a stable action to promote the driving safety.

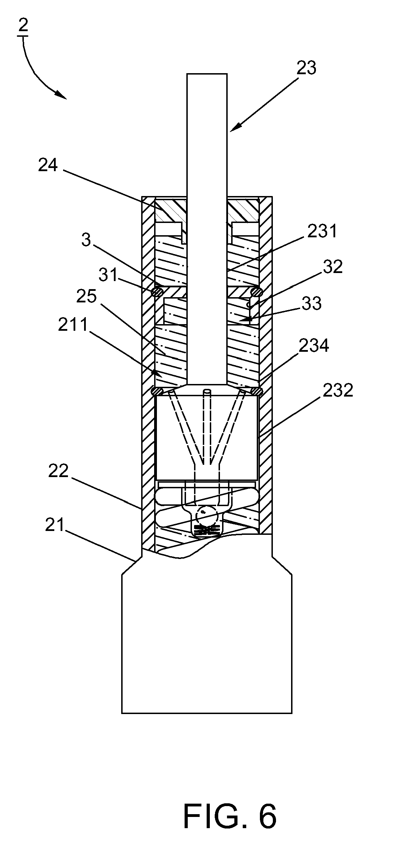

Fig. **6** shows a second preferred embodiment of the present invention. The tension regulator **2** applied to the timing belt is similar to that of the first preferred embodiment. In this embodiment, the tension regulator **2** similarly comprises a body **21,** an elastic device **22,** a propelling device **23** and a blocking device **24.** Wherein, the disposing manner of the first blocking member **3** on the body **21** is similarly to be firmly grasped by the fastener **31** for being fixed on the sliding space **211.** Differently, the first blocking member **3** further includes a first wall **32,** and a receiving room **33** encompassed by the first wall **32,** thereby permitting the first blocking member **3** to be formed like a cup. As a result, no matter the first blocking member **3** is formed as that depicted in the Fig. 5 or in the Fig. 6, the first blocking member **3** is able to obstruct the leakage of the hydraulic oil **25** and prevent the oil from scattering in time of the pressing. Besides the function as mentioned above, the first blocking member **3** is able to preferably obstruct the entry of air, and the hydraulic oil **25** could steadily stay in the receiving room **33,** so that sufficient hydraulic oil **25** could be assured to conduce to a smooth sliding movement of the plunger **232,** and the propelling member **231** could be also accordingly driven and projected with stability.

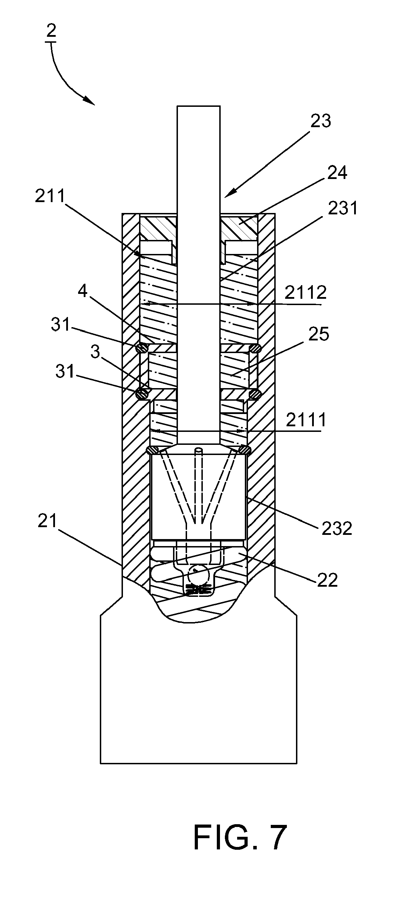

Fig. **7** shows a third preferred embodiment of the present invention. The tension regulator **2** applied to the timing belt comprises comparable elements similar to those in the first embodiment like the body **21,** the elastic device **22,** the propelling device **23,** the blocking device **24** and the first blocking member **3.** Differently, in this embodiment the sliding space **211** of the body **21** includes a first area **2111** and a second area **2112** communicated with the first area **2111** as well as disposed near the opening **212.** Further, a second blocking member **4** disposed on the body **21** is firmly grasped by the fastener **31** for fixing to the sliding space **211.** Moreover, the second blocking member **4** has a blocking wall **41,** and an accommodating room **42** encompassed by the blocking wall **41,** thereby allowing the second blocking member **4** to be formed like a cup. Accordingly, the second blocking member **4** is superimposed on the first blocking member **3** as shown in the Figure. Wherein, the first area **2111** has a diameter smaller than a diameter of the second area **2112.** Further, the elastic device **22** could be installed at the first area **2111,** and both the first blocking member **3** and the second blocking member **4** firmly grasped by the fastener **31** are respectively located within the first area **2111** and the second area **2112.** Therefore, the propelling member **231** is able to be well supported by the both first and second blocking members **3, 4** to achieve a more stable propelling action without slanting and lead to a more steady thrust from the tension regulator **2** to the timing belt. Accompanying with the dual obstruction provided from the first and the second blocking members **3, 4,** it is able to favorably impede scattering the hydraulic oil **25** throughout. It also substantially prevents the entry of the air in the sliding space **211** and the inappropriate protrusion of the propelling member **231.**

To sum up, the present invention takes advantage of the first blocking member disposed between the plunger and the blocking member inside the sliding space for effectively limiting the sliding movement of the plunger as well as preventing the propelling member from over-protruding. As a result, the hydraulic oil could be obstructed for not impacting the blocking device to avoid a leakage. Therefore, no air would enter into the sliding space while the plunger is moved, and the operating action could be assured to be precise. Thus, in view of the stable operation provided by the tension regulator of the present invention, the driving safety could be preferably promoted.

While we have shown and described the embodiment in accordance with the present invention, it should be clear to those skilled in the art that further embodiments may be made without departing from the scope of the present invention.

## Claims

1. A tension regulator (2) applied to timing belt comprising a body (21), an elastic device (22) disposed in said body (21), a propelling device (23) disposed in said body (21) for being propelled by said elastic device (22), and a blocking device (24) sealing said body (21) for blocking said propelling device (23); wherein, a sliding space (211) being defined in said body (21) for accommodating hydraulic oil (25), and an opening (212) being defined on said body (21) for said sliding space (211) to communicate with an exterior; said propelling device (23) including a propelling member (231) elongated into said sliding space (211) and protruded out of said blocking device (24), a plunger (232) connected to said propelling member (23) and allowed sliding within said sliding space (211), a controlling member (233) installed on said plunger (232), and a limiting member (234) mounted on said sliding space (211) for limiting a sliding movement of said plunger (232); a plurality of apertures (235) being defined on said plunger (232), and an on & off function of said apertures (235) being controlled by said controlling member (233);
wherein, a first blocking member (3) being disposed between said plunger (232) and said blocking device (24) as well as engaged with said sliding space (211); a sliding movement of said propelling member (231) brought about by said plunger (232) would not affect said first blocking member (3), so that a stable support would be provided to prop up said sliding movement of said propelling member (231).

2. The tension regulator as claimed in claim 1, wherein said first blocking member (3) is grasped by a fastener (31) for fixing on said sliding space (211).

3. The tension regulator as claimed in claim 1, wherein, a second blocking member (4) is disposed on said body (21) and clasped by a fastener (31) for fixing on said sliding space (211); said second blocking member (4) includes a blocking wall (41), and an accommodating room (42) encompassed by said blocking wall (41).

4. The tension regulator as claimed in claim 1, wherein, said sliding space (211) includes a first area (2111) and a second area (2112) intercommunicated with said first area (2111) as well as disposed near to said opening (212); said first area (2111) has a diameter smaller than a diameter of said second area (2112).

5. The tension regulator as claimed in claim 1, wherein, said first blocking member (3) is extensively formed with a first wall (32), and a receiving wall (33) encompassed by said first wall (32); the sliding movement of said propelling member (231) brought about by the plunger (232) would not allow a synchronic movement on said first blocking member (3).
